# EUROPÄISCHE PATENTSCHRIFT

(11) **EP 2 820 319 B1**
(45) Veröffentlichungstag und Bekanntmachung des Hinweises auf die Patenterteilung: **18.04.2018**
(21) Anmeldenummer: 13707838.2
(22) Anmeldetag: 28.02.2013
(51) Int. Cl.: F16D 65/092

(54) **BREMSBELAG FÜR EINE KOLBENBETÄTIGTE SCHEIBENBREMSE EINES SCHIENENFAHRZEUGES ODER EINES NUTZFAHRZEUGES**
BRAKE LINING FOR A PISTON-ACTUATED DISC BRAKE OF A RAIL VEHICLE OR A UTILITY VEHICLE
GARNITURE DE FREIN POUR FREIN À DISQUES ACTIONNÉ PAR UN PISTON D'UN VÉHICULE FERROVIAIRE OU D'UN VÉHICULE UTILITAIRE

(30) Priorität: 02.03.2012 DE 102012004606
(43) Veröffentlichungstag der Anmeldung: 07.01.2015
(73) Patentinhaber: KNORR-BREMSE Systeme für Schienenfahrzeuge GmbH, 80809 München (DE)
(72) Erfinder: WALTHER, Florian, 81679 München (DE); MOSBACH, Christian, 82239 Alling (DE); WALDSTEIN, Martin, 83677 Reichersbeueren (DE)
(86) Internationale Anmeldenummer: PCT/EP2013/053987
(87) Internationale Veröffentlichungsnummer: WO 2013/127892

(56) Entgegenhaltungen:
- EP-A1- 1 930 616
- WO-A1-2010/128133
- FR-A1- 2 521 241
- US-A1- 2007 175 711

## Beschreibung

Die Erfindung betrifft einen Bremsbelag für eine kolbenbetätigte Scheibenbremse eines Schienenfahrzeuges oder eines Nutzfahrzeuges, mit einer Belagträgerplatte und einem darauf befestigten Reibbelag.

Die Belagträgerplatte eines solchen Bremsbelages dient neben der Halterung des Reibbelages auch der Übertragung der Bremskräfte, wodurch die Belagträgerplatte einer besonderen Beanspruchung unterliegt.

Insbesondere bei Scheibenbremsen mit Bremssattelbetätigung kommt es vielfach zu ungleichem Verschleiß des Reibbelages mit der Gefahr des Verbiegens der Belagträgerplatte.

Daraus wiederum kann sich eine Reduzierung des erforderlichen Lüftspiels, also des Abstands zwischen dem Reibbelag und einer Bremsscheibe ergeben, mit der Folge, dass der Reibbelag ständig an der Bremsscheibe anliegt mit erhöhtem Verschleiß bis hin zum Heißlaufen des Bremsbelages. Hieraus resultiert die Gefahr, dass die Betriebssicherheit der Scheibenbremse insgesamt abnimmt. Zumindest jedoch wird die Standzeit des Bremsbelages aufgrund unerwünschter Verschleißeffekte reduziert.

Um hier Abhilfe zu schaffen, wird die Belagträgerplatte in ihrer Dicke derart dimensioniert, dass sie eine ausreichende Steifigkeit aufweist.

Da jedoch im Bremssattel der Scheibenbremse nur ein begrenzter Raum für die Bremsbeläge zur Verfügung steht, geht die belastungsoptimierte Dimensionierung der Belagträgerplatte zulasten der Optimierung des Reibbelag-Volumens. Dies steht der für eine Optimierung der Lebensdauer eines Bremsbelages gestellten Forderung, den Reibbelag möglichst dick auszubilden, so dass die Austauschintervalle bezogen auf die Betriebszeiten verlängert werden können, entgegen.

Um eine bessere Anbindung des Reibbelages bzw. eine Erhöhung seiner Abscherfestigkeit gegenüber der Belagträgerplatte zu erreichen, ist es bekannt, die Belagträgerplatte auf der dem Reibbelag zugewandten Seite mit Noppen zu versehen. Diese sind jedoch nicht geeignet, die Biegesteifigkeit der Belagträgerplatte zu verbessern, da das für die Biegefestigkeit entscheidende Widerstandsmoment nicht in dem erforderlichen Maße erhöht wird.

In der WO 2010/128133 A1 ist ein Bremsbelag offenbart, in dessen Belagträgerplatte Sicken eingedrückt sind, wobei die dabei gebildeten Vertiefungen durch eingelegte und stoffschlüssig mit der Belagträgerplatte verbundene Anlageelemente ausgefüllt sind.

Der EP 1 930 616 A1 ist ein Bremsbelag entnehmbar, der entgegen einem gattungsgemäßen, keine Befestigungsaugen aufweist. Außerhalb des Überdeckungsbereiches des Reibbelages ist die Belagträgerplatte randseitig in Längsrichtung, etwa von der Mitte ausgehend, zunehmend verdickt, unter Ausbildung eines ansteigenden Wulstes.

Ein vergleichbarer Bremsbelag ist aus der US 2007/0175711 A1 bekannt. Allerdings ist die Verdickung des Randbereiches der Belagträgerplatte nach außen hin hier beidseitig vorgesehen, wobei ein Bereich zwischen den Verdickungen, der im Fall einer Bremsung einer besonderen Biegebeanspruchung unterliegt, die gleiche Dicke aufweist wie der Überdeckungsbereich des Reibbelags.

Ein Bremsbelag, dessen Belagträgerplatte ebenfalls keine Befestigungsaugen aufweist, ist auch aus der FR 2 521 241 A1 bekannt. In Bohrungen der Belagträgerplatte sind dabei stiftförmige Verschleißanzeigen eingesetzt.

Der Erfindung liegt die Aufgabe zugrunde, einen Bremsbelag der gattungsgemäßen Art so weiterzuentwickeln, dass seine Standzeit erhöht und die Betriebssicherheit verbessert wird.

Diese Aufgabe wird durch einen Bremsbelag mit den Merkmalen des Anspruchs 1 gelöst.

Damit ist ein Bremsbelag geschaffen, der bezüglich des Reibbelages volumen- und bezüglich der Belagträgerplatte belastungsoptimiert ist.

Bevorzugt ist mindestens eine Verstärkungsrippe außerhalb des Überdeckungsbereiches des Reibbelages vorgesehen. Denkbar ist jedoch auch, diese Verstärkungsrippe im Überdeckungsbereich anzuordnen, wobei allerdings die nutzbare Dicke des Reibbelages entsprechend eingeschränkt ist.

Gerade durch den nun möglichen dickeren Reibbelag ergeben sich Vorteile, die insbesondere aus einer höheren Standzeit des Bremsbelages resultieren, mit der Folge, dass die Reparatur- bzw. Instandsetzungskosten gesenkt werden.

Prinzipiell kann jedoch auch die Dicke des Reibbelages unverändert bleiben, wodurch sich das Gewicht des Bremsbelages insgesamt reduziert, da die Belagträgerplatte nur noch in dem Bereich die für eine Biegesteifigkeit notwendige Dicke besitzt, die besonderen Belastungen ausgesetzt ist.

Zur Erhöhung der Standzeit des Bremsbelages trägt insbesondere bei, dass ein ungleicher Verschleiß, der, wie geschildert, seine Ursache in der Verbiegung der Belagträgerplatte hat, quasi ausgeschlossen ist.

Darüber hinaus wird die Verbindung zwischen der Belagträgerplatte und dem Reibbelag durch das nun starre Verhalten der Belagträgerplatte nicht mehr in dem Maße beansprucht, wie bisher, was sogar zu einem Ausbrechen des Reibbelages führen konnte, mit den sich daraus ergebenden Folgen vornehmlich bezüglich der Betriebssicherheit.

Dies trifft gleichermaßen auf die nun nicht mehr existente Gefahr der unzulässigen Verringerung des Lüftspiels zu, die, wie bereits erwähnt, zu einem Heißlaufen des Bremsbelages führen kann. Auch ein Heißlaufen infolge von elastischem Rückfedern der Belagträgerplatte wird durch die Versteifung vermieden.

Nach einer vorteilhaften Weiterbildung der Erfindung ist vorgesehen, die mindestens eine Verstärkungsrippe durch Umbiegen eines Randbereiches der aus Blech hergestellten Belagträgerplatte auszubilden, wobei dieser Randbereich zwischen zwei Befestigungsaugen der Belagträgerplatte angeordnet ist, die der Aufhängung des Bremsbelages an einer Axialführung dienen.

Das Umbiegen im Sinne eines Abwinkelns über eine Strecke, die etwa dem Abstand zwischen den beiden Befestigungsaugen entspricht, lässt sich besonders einfach herstellen. Die Verstärkungsrippe kann aber auch durch spanende Bearbeitung aus einer dickeren Belagträgerplatte als Ausgangsmaterial hergestellt sein, wobei die Verstärkungsrippe als Steg zwischen den beiden Befestigungsaugen herausgebildet ist oder als Fläche, einschließlich gleich dicker Ränder der Befestigungsaugen, wobei dann der Überdeckungsbereich, also die Auflagefläche des Reibbelages entsprechend bearbeitet, d.h. abgesetzt ist.

Eine besonders einfache Herstellung ergibt sich naturgemäß dann, wenn die Belagträgerplatte aus Gusseisen besteht, wobei dann die Verstärkungsrippe, in welcher Form auch immer, gleich angegossen werden kann.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:

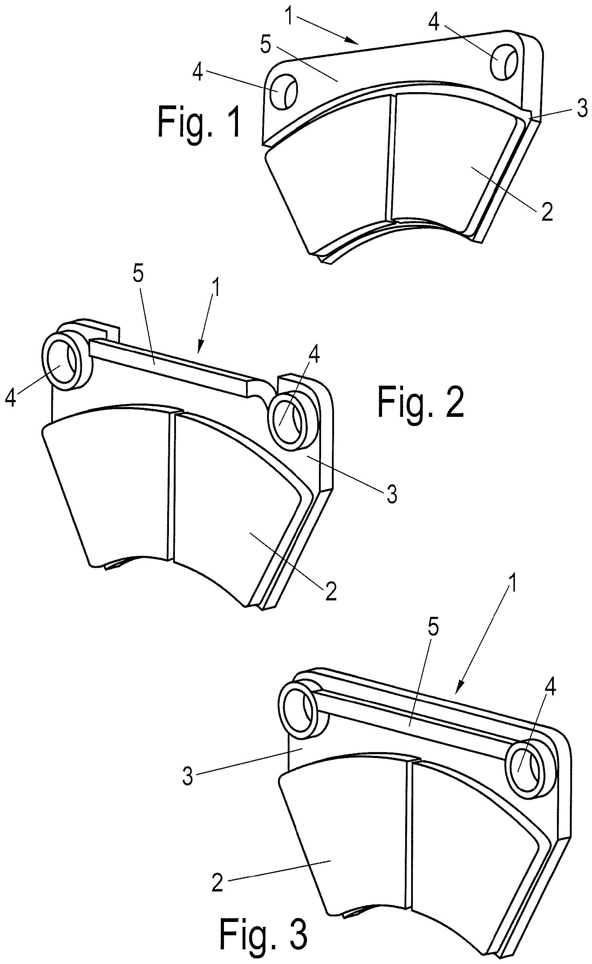

- Figuren 1 bis 3: jeweils eine Ausführungsvariante eines erfindungsgemäßen Bremsbelages in einer perspektivischen Ansicht.

In den Figuren ist jeweils ein Bremsbelag für eine kolbenbetätigte Scheibenbremse eines Schienen- oder Nutzfahrzeuges dargestellt, der insgesamt mit dem Bezugszeichen 1 versehen ist.

Dieser Bremsbelag 1 besteht aus einer Belagträgerplatte 3 und einem darauf befestigten Reibbelag 2.

In den Beispielen weist die Belagträgerplatte 3 auf ihrer dem Reibbelag 2 zugewandten Seite wenigstens eine Verstärkungsrippe 5 auf. Prinzipiell kann auch die gegenüberliegende Seite mit Verstärkungsrippen versehen sein.

Zur Befestigung des Bremsbelages 1 in einem nicht dargestellten Bremssattel der Scheibenbremse sind in der Belagträgerplatte 3 zwei abständig zueinander angeordnete Befestigungsaugen 4 vorgesehen, die der Aufnahme von Führungsbolzen dienen, zur Verschiebung des Bremsbelages 1 in Richtung der Bremsscheibe.

Bei in der Figur 1 gezeigten Ausführungsvariante ist die Auflagefläche der Belagträgerplatte 3 für den Reibbelag 2 gegenüber dem übrigen Bereich der Belagträgerplatte 3 abgestuft, also tiefer gelegt, so dass sich im verbleibenden, angrenzenden Bereich die Verstärkungsrippe 5 herausbildet in die auch die beiden Befestigungsaugen 4 eingebracht sind.

Die abgestufte Fläche kann, wenn die Belagträgerplatte 3 aus einer Blechplatte besteht, spanend herausgebildet sein. Denkbar ist aber auch, die Belagträgerplatte 3 als Gussteil auszubilden und die Abstufung gleich mit einzubringen.

Bei dem in der Figur 2 gezeigten Beispiel ist die Verstärkungsrippe 5 durch Abwinkelung des den Befestigungsaugen 4 zugeordneten Randbereichs der Belagträgerplatte 3 ausgebildet, wobei sich die Verstärkungsrippe 5 über nahezu den gesamten Abstandsbereich zwischen den Befestigungsaugen 4 erstreckt.

Dies ist gleichermaßen bei dem Bremsbelag 1 der Fall, der in der Figur 3 dargestellt ist. Hierbei kann die Verstärkungsrippe 5 aus Vollmaterial gebildet oder angeformt sein, wenn die Belagträgerplatte 3 gegossen ist.

Für eine ausreichende Führungsfläche der Befestigungsaugen 4 sorgt ein gegenüber der Belagträgerplatte 3 vorstehender Rand, dessen Höhe etwa der Höhe der Verstärkungsrippe 5 entspricht.

Die in den Figuren 2 und 3 erkennbaren Verstärkungsrippen 5 sind als Gerade ausgebildet. Denkbar ist jedoch auch, diese, je nach Bedarf, in einer anderen geometrischen Form auszubilden, beispielsweise bogenförmig.

## Patentansprüche

1. Bremsbelag für eine Scheibenbremse eines Schienen- oder Nutzfahrzeuges, mit einer zwei Befestigungsaugen (4) aufweisenden Belagträgerplatte (3) und einem darauf befestigten Reibbelag (2), **dadurch gekennzeichnet, dass** auf der dem Reibbelag (2) zugewandten Seite der Belagträgerplatte (3), außerhalb des Überdeckungsbereiches des Reibbelages (2), eine Verstärkungsrippe (5) mit einer größeren Dicke als der angrenzende Bereich vorgesehen ist, wobei die Verstärkungsrippe (5) als ein Steg ausgebildet ist, der zwischen den Befestigungsaugen (4) der Belagträgerplatte (3) angeordnet ist oder in den die Befestigungsaugen (4) eingebracht sind.

2. Bremsbelag nach Anspruch 1, **dadurch gekennzeichnet, dass** die Verstärkungsrippe (5) als Abwinkelung eines Randbereiches der Belagträgerplatte (3) ausgebildet ist.

3. Bremsbelag nach Anspruch 1 oder 2, **dadurch gekennzeichnet, dass** die Verstärkungsrippe (5) durch Abstufung der benachbarten Auflagefläche für den Reibbelag (2) gebildet ist.

4. Bremsbelag nach einem der vorhergehenden Ansprüche, **dadurch gekennzeichnet, dass** die Belagträgerplatte (3) aus Blech oder Gusseisen besteht.

5. Bremsbelag nach einem der vorhergehenden Ansprüche, **dadurch gekennzeichnet, dass** die Verstärkungsrippe (5) als Gerade, Bogen oder dergleichen ausgebildet ist.

## Claims

1. Brake lining for a disk brake of a rail or utility vehicle, having a lining carrier plate (3) which has two fastening eyelets (4) and having a friction lining (2) which is fastened thereon, **characterized in that** a reinforcing rib (5) with a greater thickness than the adjoining region is provided, outside the region of overlap of the friction lining (2), on that side of the lining carrier plate (3) which faces the friction lining (2), wherein the reinforcing rib (5) is configured as a web which is arranged between the fastening eyelets (4) of the lining carrier plate (3) or in which the fastening eyelets (4) are made.

2. Brake lining according to Claim 1, **characterized in that** the reinforcing rib (5) is configured as an angled-away portion of an edge region of the lining carrier plate (3).

3. Brake lining according to Claim 1 or 2, **characterized in that** the reinforcing rib (5) is formed by a stepped formation of the adjacent support face for the friction lining (2).

4. Brake lining according to one of the preceding claims, **characterized in that** the lining carrier plate (3) is composed of metal sheet or cast iron.

5. Brake lining according to one of the preceding claims, **characterized in that** the reinforcing rib (5) is configured as a straight line, arc or the like.

## Revendications

1. Garniture de frein pour un frein à disque d'un véhicule ferroviaire ou utilitaire, ayant un plateau formant porte-garniture et ayant deux oeillets (4) de fixation et une garniture (2) de friction qui y est fixée, **caractérisée en ce que**, du côté tourné vers la garniture (2) de friction, du plateau (3) formant porte-garniture est prévu, à l'extérieur de la partie de recouvrement de la garniture (2) de friction, une nervure (5) de renfort, ayant une épaisseur plus grande que la partie qui en est voisine, la nervure (5) de renfort étant constituée sous la forme d'une entretoise, qui est disposée entre les oeillets (4) de fixation du plateau (3) formant porte-garniture ou dans laquelle les oeillets (4) de fixation sont ménagés.

2. Garniture de frein suivant la revendication 1, **caractérisée en ce que** la nervure (5) de renfort est constituée sous la forme d'un coudage sur une partie de bord du plateau (3) formant porte-garniture.

3. Garniture de frein suivant la revendication 1 ou 2, **caractérisée en ce que** la nervure (5) de renfort est formée par un échelon de la surface voisine de support de la garniture (2) de friction.

4. Garniture de frein suivant l'une des revendications précédentes, **caractérisée en ce que** le plateau (3) formant porte-garniture est en tôle ou en fer.

5. Garniture de frein suivant l'une des revendications précédentes, **caractérisée en ce que** la nervure (5) de renfort est constituée sous la forme d'une droite, d'un arc ou analogues.
